# EUROPÄISCHE PATENTSCHRIFT

(11) **EP 3 550 401 B1**
(45) Veröffentlichungstag und Bekanntmachung des Hinweises auf die Patenterteilung: **01.12.2021**
(21) Anmeldenummer: 19154874.2
(22) Anmeldetag: 31.01.2019
(51) Int. Cl.: G06F 1/32, G07C 3/00, G08C 17/00, H02J 7/00, G06F 1/26, G06F 1/3231, G06F 1/3234, H02J 7/34, G01L 1/00, G01F 23/00

(54) **FELDGERÄT ZUR ERFASSUNG EINER PROZESSVARIABLE**
FIELD DEVICE FOR DETERMINING A PROCESS VARIABLE
APPAREIL DE TERRAIN PERMETTANT DE DÉTECTER UNE VARIABLE DE PROCESSUS

(30) Priorität: 05.04.2018 DE 102018205111
(43) Veröffentlichungstag der Anmeldung: 09.10.2019
(73) Patentinhaber: VEGA Grieshaber KG, 77709 Wolfach (DE)
(72) Erfinder: RAUER, Winfried, 77716 Fischerbach (DE); STAIGER, Holger, 78739 Hardt (DE)
(74) Vertreter: Maiwald Patent- und Rechtsanwaltsgesellschaft mbH

(56) Entgegenhaltungen:
- EP-A1- 2 256 566
- EP-A1- 2 521 241
- EP-A2- 2 413 213
- US-A1- 2014 152 819

## Beschreibung

### Gebiet der Erfindung

Die Erfindung betrifft ein Feldgerät zur Erfassung einer Prozessvariable. Zudem ist die Erfindung auf die Verwendung eines solchen Feldgerätes und ein Verfahren zum Betreiben eines solchen Feldgerätes gerichtet.

### Hintergrund der Erfindung

In der Prozessautomation werden Feldgeräte vielfältig unter unterschiedlichen Bedingungen, unter anderem in explosionsgeschützten Bereichen, eingesetzt. Häufig werden die Feldgeräte hierbei durch Personen bzw. Benutzer abgelesen. was insbesondere einen Betrieb des Feldgeräts in explosionsgeschützten Bereichen erschweren kann. Damit Benutzer die Feldgeräte zu beliebigen Zeitpunkten ablesen können, sind häufig alle Komponenten der Feldgeräte dauerhaft in Betrieb und/oder werden dauerhaft mit elektrischer Energie versorgt. Dies kann in einem erhöhten Energiebedarf der Feldgeräte resultieren. Auch kann vorgesehen sein, die Feldgeräte manuell zu betätigen und/oder zu aktivieren, damit diese abgelesen werden können. Dies kann wiederum den Ablesevorgang erschweren.

EP 2413 213 A2 beschreibt ein Feldgerät mit einem Sensor, einem WLAN-Modul und einem Display. Ferner verfügt das Feldgerät über eine Infrarotschnittstelle, über welche Steuersignale von einer Infrarotvorrichtung empfangen werden können.

EP 2521 241 A1 beschreibt eine Ladestromregelungsvorrichtung zum Laden eines Energiespeichers für ein Feldgerät und zum Regeln eines Ladestroms für den Energiespeicher.

Dokument US 2014/0152819 A1 beschreibt ein System zum Betätigen eines elektrischen Verbrauchers, im Speziellen einer Kamera, in einem Gebäude, welches über einen Aufzug verfügt. Dabei wird die Kamera aktiviert, sobald ein Benutzer den Aufzug betritt.

### Zusammenfassung der Erfindung

Mit Ausführungsformen der Erfindung kann in vorteilhafter Weise ein verbessertes Feldgerät bereitgestellt werden.

Die Erfindung ist in den unabhängigen Ansprüchen definiert. Vorteilhafte Weiterbildungen der Erfindung ergeben sich aus den abhängigen Ansprüchen und der nachfolgenden Beschreibung.

Ein Aspekt der Erfindung betrifft ein Feldgerät gemäß Anspruch 1.

Durch die Betätigung des elektrischen Verbrauchers des Feldgeräts, welcher grundsätzlich eine beliebige Komponente des Feldgeräts bezeichnen kann, basierend auf und/oder als Antwort auf das Überwachungssignal, welches anzeigen kann, dass ein Benutzer in der Umgebung des Feldgeräts ist, kann in vorteilhafter Weise sichergestellt sein, dass der elektrische Verbraucher nur bei Bedarf und/oder nur bei Anwesenheit des Benutzers in der Umgebung des Feldgeräts betätigt wird. Dies kann unter anderem zu erheblichen Energieeinsparungen führen. Auch kann der elektrische Verbraucher durch die erfindungsgemäße Ausgestaltung des Feldgeräts berührungsfrei durch den Benutzer betätigt werden, was insbesondere bei einem Einsatz des Feldgeräts in einem explosionsgeschützten Bereich vorteilhaft sein kann.

Das Feldgerät weist zumindest eine Steuereinheit auf, wobei es sich bei der Steuereinheit etwa um eine Steuerschaltung, eine Logik und/oder einen Mikroprozessor handeln kann. Die Steuereinheit kann dazu eingerichtet sein, eine oder mehrere Komponenten und/oder elektrische Verbraucher des Feldgeräts zu steuern, zu betätigen, zu aktivieren und/oder zu deaktivieren. Des Weiteren umfasst das Feldgerät wenigstens einen elektrischen Verbraucher, welcher im Kontext der vorliegenden Offenbarung eine beliebige Komponente des Feldgeräts bezeichnen kann. Beispielsweise kann der elektrische Verbraucher einen Sensor zur Erfassung eines Messwertes der Prozessvariable, etwa eines Drucks, eines Füllstands und/oder eines Grenzstands eines Mediums, bezeichnen. Alternativ oder zusätzlich kann es sich bei dem wenigstens einen elektrischen Verbraucher um ein Anzeigeelement und/oder eine beliebige andere Komponente des Feldgeräts handeln. Des Weiteren ist die Steuereinheit dazu ausgelegt, ein Überwachungssignal zu empfangen, beispielsweise ein Überwachungssignal einer Überwachungsvorrichtung. Bei der Überwachungsvorrichtung kann es sich bevorzugt um einen Näherungssensor und/oder einen Nahfeldsensor oder Ähnliches handeln. Dieser Aspekt wird insbesondere im weiteren Verlauf detailliert erläutert.

Die Überwachungsvorrichtung ist dazu ausgelegt, eine Anwesenheit eines Benutzers des Feldgeräts zu detektieren und das Überwachungssignal bereitzustellen und/oder an die Steuereinheit auszugeben. Insbesondere kann das Überwachungssignal durch die Steuereinheit empfangen, ausgewertet und/oder verarbeitet werden. Allgemein kann das Überwachungssignal dabei die Anwesenheit des Benutzers des Feldgeräts in der Umgebung des Feldgeräts anzeigen und/oder indizieren. Mit anderen Worten kann das Überwachungssignal Informationen bezüglich der Anwesenheit des Benutzers in der Umgebung des Feldgeräts enthalten. Die Steuereinheit kann etwa dazu eingerichtet sein, basierend auf einer Verarbeitung des Überwachungssignals zu ermitteln, ob sich der Benutzer in der Umgebung des Feldgeräts befindet. Alternativ kann die Überwachungsvorrichtung auch einen Gegenstand detektieren, wie bspw. die Anwesenheit eines Kraftfahrzeuges mit welchem sich der Benutzer der Überwachungsvorrichtung nähert. Insbesondere kann das Feldgerät an einem Förderband oder ähnlichem angeordnet sein, wobei die Überwachungsvorrichtung alternativ oder ergänzend zu dem Benutzer ein Objekt, wie bspw. ein Paket, detektiert.

Allgemein kann die Überwachungsvorrichtung Teil des Feldgeräts sein und/oder in dem Feldgerät integriert sein. Alternativ kann die Überwachungsvorrichtung eine externe Vorrichtung bezeichnen, welche das Überwachungssignal an das Feldgerät und/oder die Steuereinheit übermittelt. Das Überwachungssignal kann dabei drahtlos oder über eine drahtgebundene Verbindung an das Feldgerät und/oder die Steuereinheit übertragen werden. Zudem ist die Steuereinheit dazu eingerichtet, basierend auf und/oder als Antwort auf das Überwachungssignal den wenigstens einen elektrischen Verbraucher zu betätigen. Dies bedeutet, dass die Steuereinheit dazu ausgelegt ist, einen elektrischen Verbraucher zu aktivieren, zu deaktivieren, zu steuern und/oder zu regeln. Bevorzugt handelt es sich bei dem wenigstens einen elektrischen Verbraucher um eine Sensoreinheit (bzw. einen Sensor), welche zur Druck-, Füllstand- und/oder Grenzstandüberwachung eines Mediums ausgelegt ist. Alternativ oder zusätzlich kann es sich bei dem wenigstens einen elektrischen Verbraucher um ein Anzeigeelement des Feldgeräts handeln, welches insbesondere dazu ausgelegt ist, dem Benutzer einen Messwert der Prozessvariable und/oder eine Messwertreihe anzuzeigen. Erfindungsgemäß ist vorgesehen, dass der elektrische Verbraucher berührungsfrei, aufgrund der Anwesenheit des Benutzers in der Umgebung, und/oder automatisch durch die Steuereinheit betätigt wird.

Erfindungsgemäß nähert sich ein Benutzer dem Feldgerät, wobei das Feldgerät die Anwesenheit des Benutzers erkennt und den elektrischen Verbraucher betätigt. Auf diese Weise kann beispielsweise eine Messung, etwa eine Füllstandmessung, ausgelöst werden, ohne dass eine manuelle Betätigung des Feldgeräts durch den Benutzer erforderlich ist. Alternativ oder zusätzlich kann das Feldgerät dem Benutzer einen oder mehrere Messwerte der Prozessvariable auf einem Anzeigeelement des Feldgeräts anzeigen, sobald sich der Benutzer in der Umgebung des Feldgeräts befindet. Auch kann vorgesehen sein, den elektrischen Verbraucher (z.B. das Anzeigeelement) zu deaktivieren, sobald sich der Benutzer des Feldgeräts wieder von dem Feldgerät entfernt.

Gemäß einer beispielhaften Ausführungsform der Erfindung ist die Steuereinheit dazu eingerichtet, basierend auf dem Überwachungssignal den wenigstens einen elektrischen Verbraucher zu aktiveren und/oder zu deaktivieren, sodass der elektrische Verbraucher durch den Benutzer berührungsfrei aktivierbar und/oder deaktivierbar ist.

Ein Aktivieren oder Deaktivieren des elektrischen Verbrauchers kann im Kontext der vorliegenden Offenbarung bedeuten, dass der elektrische Verbraucher mit Strom versorgt wird oder nicht mit Strom versorgt wird, d.h. eine Stromversorgung hergestellt oder unterbrochen wird. Alternativ oder zusätzlich kann dies bedeuten, dass eine Versorgungsspannung eines elektrischen Verbrauchers zur Aktivierung desselben erhöht oder zur Deaktivierung reduziert wird. Auf diese Weise kann der elektrische Verbraucher mittels des Überwachungssignals und/oder der Steuereinheit berührungsfrei und/oder berührungslos aktiviert und/oder deaktiviert werden. Dies kann insbesondere bei Einsatz des Feldgeräts in einer explosionsgeschützten Umgebung vorteilhaft sein.

Gemäß einer beispielhaften Ausführungsform der Erfindung weist das Feldgerät eine Überwachungsvorrichtung auf, welche dazu ausgelegt ist, die Anwesenheit des Benutzers in der Umgebung des Feldgeräts zu detektieren und als Antwort auf eine Detektion des Benutzers das Überwachungssignal an die Steuereinheit zu übermitteln.

Bei der Überwachungsvorrichtung kann es sich um eine Vorrichtung handeln, welche dazu eingerichtet ist, die Umgebung des Feldgeräts zu überwachen und das Überwachungssignal auszugeben, wenn ein Objekt und/oder der Benutzer in der Umgebung des Feldgeräts ist. Es kann sich bei der Überwachungsvorrichtung beispielsweise um einen Näherungssensor und/oder einen Nahfeldsensor oder Ähnliches handeln, wie später in dieser Beschreibung detailliert erläutert wird. Wie bereits voranstehend erläutert, ist die Überwachungseinheit dazu eingerichtet, den Benutzer in der Umgebung des Feldgeräts zu detektieren und/oder zu erkennen und das Überwachungssignal an die Steuereinheit auszugeben, welches der Steuereinheit mitteilt und/oder anzeigt, dass sich der Benutzer des Feldgeräts in dessen Umgebung befindet. Als Antwort auf das Überwachungssignal kann die Steuereinheit sodann den wenigstens einen elektrischen Verbraucher automatisch betätigen. Dies kann insbesondere eine Handhabung und/oder Bedienung des Feldgeräts durch den Benutzer vereinfachen. Zudem kann aufgrund der Betätigung des elektrischen Verbrauchers durch die Steuereinheit als Antwort auf das Überwachungssignal sichergestellt sein, dass der elektrische Verbraucher nur dann betätigt wird, wenn der Benutzer in der Umgebung des Feldgeräts ist. Dies kann zu erheblichen Energieeinsparungen führen.

Gemäß einer beispielhaften Ausführungsform ist die Überwachungsvorrichtung in dem Feldgerät integriert. Beispielsweise kann die Überwachungsvorrichtung in einem Gehäuse des Feldgeräts montiert, angeordnet und/oder befestigt sein. Die Überwachungsvorrichtung kann mit der Steuereinheit des Feldgeräts in Signalverbindung stehen, etwa zur Übermittlung des Überwachungssignals.

Das Gehäuse des Feldgeräts kann hierbei vollständig geschlossen sein und/oder keine Öffnungen aufweisen. Beispielsweise kann das Feldgerät einen oder mehrere Energiespeicher aufweisen, etwa in Form einer Batterie, eines Kondensators und/oder eines Akkumulators. Mit anderen Worten kann das Feldgerät batteriebetrieben sein. Alternativ kann das Feldgerät auch mittels einer stationären Stromversorgung mit Energie versorgt werden, insbesondere eine 4-20mA Stromversorgung.

Gemäß einer beispielhaften Ausführungsform der Erfindung ist die Überwachungsvorrichtung außerhalb eines Gehäuses des Feldgeräts angeordnet. Außerhalb des Gehäuses des Feldgeräts kann insbesondere bedeuten, dass die Überwachungsvorrichtung beabstandet von dem Feldgerät angeordnet ist und/oder an der Außenfläche des Feldgeräts anliegt. Dabei weist das Feldgerät ferner eine Schnittstelle zur Anbindung des Feldgeräts an die Überwachungsvorrichtung auf. Dies ermöglicht insbesondere die Übertragung des Überwachungssignals der Überwachungsvorrichtung an das Feldgerät oder das Verbinden des Feldgeräts mit der Überwachungsvorrichtung. Dabei können sowohl das Feldgerät als auch die Überwachungsvorrichtung jeweils eine Schnittstelle aufweisen, die insbesondere mittels einer drahtgebundenen Verbindung oder einer kabellosen Verbindung verbunden werden können. Daraus resultiert insbesondere der Vorteil, dass das Feldgerät und die Überwachungsvorrichtung separat voneinander montiert werden können, sodass eine erhöhte Flexibilität des Einsatzes des Feldgeräts ermöglicht wird.

Gemäß einer beispielhaften Ausführungsform der Erfindung weist die Überwachungsvorrichtung wenigstens ein Element ausgewählt aus der Gruppe bestehend aus einem Näherungssensor, einem Nahfeldsensor, einem Kommunikationsmodul zum Herstellen einer Kommunikationsverbindung mit einem Endgerät des Benutzers, einem Bewegungssensor, einem Abstandssensor, einem Punktsensor, einem Mikrowellensensor, einem optischen Sensor, einer Kamera, einem Lasersensor, einem kapazitiven Sensor, einem Infrarotsensor, einem Wärmesensor, einem Radarsensor und/oder einem Ultraschallsensor auf. Erfindungsgemäß weist die Überwachungsvorrichtung einen RFID Sensor zur Detektion eines RFID Transponders des Benutzers auf. Zudem kann das Element ein Mikrofon sein, welches Sprachbefehle und/oder Laute erkennt und an die Überwachungsvorrichtung weiterleitet, sodass diese mittels Sprachbefehlen und/oder Lauten steuerbar ist. Alternativ kann das Element auch ein Magnetfeldsensor sein.

Die Überwachungsvorrichtung kann somit einen oder mehrere Sensoren aufweisen, welche die Umgebung des Feldgeräts überwachen. Derartige Sensoren können unterschiedlich ausgeführt sein. Alternativ oder zusätzlich kann ein Kommunikationsmodul zur Überwachung der Umgebung genutzt werden, welches eine Kommunikationsverbindung mit einem Endgerät des Benutzers, etwa einem Smartphone, einem Laptop, einem Tablet oder dergleichen, herstellen kann, insbesondere wenn dieses in der Umgebung des Feldgeräts ist. Die Kommunikationsverbindung kann hierbei auf einem beliebigen Kommunikationsstandard basieren. Beispielsweise kann über das Kommunikationsmodul eine Bluetooth-, WLAN-, Mobilfunk-, LoRa-, Sigfox-, NB-IoT-Verbindung oder eine beliebige andere Verbindung mit dem Endgerät hergestellt werden. Das Herstellen einer Kommunikationsverbindung kann gleichsam ein Koppeln des Feldgeräts und des Endgeräts bedeuten. Das Herstellen der Kommunikationsverbindung kann somit dazu genutzt werden, die Anwesenheit des Benutzers in der Umgebung zu detektieren. Erfindungsgemäß weist die Überwachungsvorrichtung einen RFID-Sensor zum Auslesen eines RFID- Transponders des Benutzers auf. Auch damit kann zuverlässig die Anwesenheit des Benutzers in der Umgebung des Feldgeräts detektiert werden.

Gemäß einer beispielhaften Ausführungsform der Erfindung weist die Überwachungsvorrichtung wenigstens ein Kommunikationsmodul auf, welches dazu eingerichtet ist, eine drahtlose Kommunikationsverbindung mit einem Endgerät des Benutzers herzustellen. Beispielsweise kann die Anwesenheit des Benutzers in der Umgebung des Feldgeräts basierend auf einer Kopplung des Kommunikationsmoduls mit dem Endgerät des Benutzers detektiert werden. Bei dem Kommunikationsmodul kann es sich insbesondere um ein Bluetooth-, WLAN-, Mobilfunk-, LoRa-, Sigfox-, und/oder NB-IoT-Modul handeln, das dazu eingerichtet ist, mit dem Endgerät des Benutzers zu kommunizieren und/oder beispielsweise Messwerte oder Ähnliches zu übermitteln. Diese Ausführungsform hat insbesondere den Vorteil, dass vereinfacht Messwerte übertragen werden können und somit die Ergonomie des Feldgeräts verbessert wird. Zudem kann eine Funktionsintegration erfolgen, da das Kommunikationsmodul auch die Funktion der Überwachung der Umgebung und/oder Detektion der Anwesenheit des Benutzers in der Umgebung übernehmen kann. Damit können etwa Bauraum und Energie eingespart werden.

Bei einer beispielhaften Ausführungsform der Erfindung ist das Feldgerät als ein Füllstandmessgerät zur Erfassung eines Füllstands eines Mediums, beispielsweise in einem Behälter, als ein radarbasiertes Füllstandmessgerät zur Erfassung eines Füllstands eines Mediums, als ein Fließgeschwindigkeitsmessgerät zur Erfassung einer Fließgeschwindigkeit eines Mediums, als ein Grenzstandmessgerät zur Erfassung eines Grenzstands eines Mediums und/oder als ein Druckmessgerät zur Erfassung eines Drucks eines Mediums ausgebildet. Bei der Prozessvariable kann es sich somit um einen Füllstand, eine Fließgeschwindigkeit, einen Grenzstand- und/oder einen Druck handeln. Das Feldgerät kann hierzu einen oder mehrere geeignete Sensoren zur Erfassung eines oder mehrerer Werte bzw. Messwerte einer oder mehrerer Prozessvariablen aufweisen.

Gemäß einer beispielhaften Ausführungsform der Erfindung weist das Feldgerät einen Energiespeicher zur Versorgung von elektrischen Komponenten auf. Die Steuereinheit ist dazu eingerichtet, in Abwesenheit des Benutzers und/oder in Abwesenheit des Überwachungssignals elektrische Energie in dem Energiespeicher zu speichern. Bei dem Energiespeicher kann es sich beispielsweise um eine Batterie, einen Akku, einen Lithium-Ionen-Akku, einen Lithium-Polymer-Akku, einen Kondensator, einen Superkondensator, und/oder um einen beliebigen anderen Energiespeicher handeln. Durch Speicherung und/oder Zwischenspeicherung der elektrischen Energie in Abwesenheit des Benutzers kann diese (eingesparte) Energie bei Bedarf einem weiteren elektrischen Verbraucher und/oder einer weiteren Komponente des Feldgeräts zugeführt werden. Beispielsweise kann die Energie zur Messwertübertragung und/oder zur Durchführung einer Messung genutzt werden. Somit kann das Feldgerät energieeffizient betrieben werden, da einerseits Energie eingespart und in dem Energiespeicher zwischengespeichert werden kann, wenn der Benutzer sich nicht in der Umgebung des Feldgeräts befindet, und andererseits diese Energie weiteren Komponenten zur Verfügung gestellt werden kann.

Gemäß einer beispielhaften Ausführungsform der Erfindung weist der wenigstens eine elektrische Verbraucher wenigstens eine Anzeigevorrichtung (bzw. ein Anzeigeelement) auf. Dabei ist die Steuereinheit dazu eingerichtet, basierend auf dem Überwachungssignal die wenigstens eine Anzeigevorrichtung zu aktivieren und/oder eine Beleuchtung der Anzeigevorrichtung anzupassen. Bei der Anzeigevorrichtung kann es sich beispielsweise um ein LED- oder LCD-Element handeln, welches optional über ein Beleuchtungselement verfügen kann. Die Steuereinheit ist bevorzugt dazu ausgelegt, anhand des Überwachungssignals und/oder als Antwort auf das Überwachungssignal die Anzeigevorrichtung zu aktivieren und/oder die Beleuchtungsvorrichtung und/oder die Beleuchtung der Anzeigevorrichtung anzupassen, insbesondere eine Helligkeit der Beleuchtung der Anzeigevorrichtung zu erhöhen. Diese Ausführungsform hat den spezifischen Vorteil, dass durch Reduktion der Aktivzeit der Anzeigevorrichtung bzw. der Beleuchtung der Anzeigevorrichtung deutlich Energie eingespart werden kann und somit die Lebensdauer und/oder Betriebszeit des Feldgeräts erhöht werden kann. Beispielsweise kann sich ein Benutzer des Feldgeräts dem Feldgerät nähern, woraufhin die Überwachungsvorrichtung ein Überwachungssignal an die Steuereinheit weitergeben und/oder übermitteln kann, welche daraufhin die Helligkeit der Anzeigevorrichtung erhöhen kann. Sobald der Benutzer die Umgebung des Feldgeräts wieder verlässt, kann die Helligkeit der Anzeigevorrichtung reduziert werden. Damit kann das Feldgerät energieeffizient betrieben werden.

Gemäß einer beispielhaften Ausführungsform der Erfindung weist der zumindest eine elektrische Verbraucher eine Sensoreinheit zur Messung der Prozessvariablen auf. Bei der Messung der Prozessvariablen kann es sich beispielsweise um die Messung, Erfassung und/oder Ermittlung eines Werts und/oder eines Messwerts der zur überwachenden Prozessvariablen handeln. Das Feldgerät kann optional dazu eingerichtet sein, eine Vielzahl an Messwerten zu speichern und/oder gesammelt, etwa als eine Datei, auszugeben. Durch eine derartige bedarfsabhängige Aktivierung bzw. Deaktivierung des elektrischen Verbrauchers und/oder der Sensoreinheit kann das Feldgerät effizient betrieben werden.

Die Steuereinheit kann somit in einem Ausführungsbeispiel dazu eingerichtet sein, basierend auf dem Überwachungssignal die Sensoreinheit derart zu betätigen, dass die Sensoreinheit eine Messung der Prozessvariablen durchführt. In anderen Worten kann die Steuereinheit dazu ausgelegt sein, aufgrund und/oder als Antwort auf das Überwachungssignal die Sensoreinheit zu betätigen, anzusteuern, zu aktivieren und/oder deren Energiezufuhr zu aktivieren, um die Sensoreinheit zur Durchführung einer Messung der Prozessvariablen zu veranlassen.

Gemäß einer beispielhaften Ausführungsform der Erfindung weist der wenigstens eine elektrische Verbraucher ein Kommunikationsmodul zur Übertragung eines Messwerts der Prozessvariablen an einen Empfänger auf. Alternativ oder zusätzlich ist die Steuereinheit dazu eingerichtet, als Antwort auf das Überwachungssignal das Kommunikationsmodul derart zu betätigen, dass ein Messwert der Prozessvariablen an den Empfänger übertragen wird. Bei der Übertragung des Messwerts der Prozessvariablen an einen Empfänger kann es sich beispielsweise um eine Übertragung von dem Feldgerät an einen PC in einer Leitstelle und/oder von dem Feldgerät an ein Endgerät des Benutzers handeln. Alternativ oder zusätzlich kann das Kommunikationsmodul mit einem Server, einer Cloud und/oder einem Cloud-ähnlichen Netzwerkprodukt vernetzt sein, sodass durch die Anwesenheit des Benutzers in Umgebung des Feldgeräts eine Übertragung des Messwerts ausgelöst wird.

Gemäß einer beispielhaften Ausführungsform der Erfindung ist die Steuereinheit ferner dazu eingerichtet, basierend auf dem Überwachungssignal eine Authentifizierung des Benutzers vorzunehmen. Erfindungsgemäß ist die Steuereinheit dazu eingerichtet, basierend auf dem Überwachungssignal eine Nutzungsberechtigung für eine Benutzung des Feldgeräts durch den Benutzer festzulegen und/oder zu aktivieren.

Beispielsweise kann es sich bei der Nutzungsberechtigung um ein Freigabelevel des jeweiligen Benutzers zur Bedienung des Feldgeräts handeln. Je nach Nutzungsberechtigung des Benutzers kann beispielsweise vorgesehen sein, dass der Benutzer nur Daten und/oder bestimmte Daten, wie z.B. Messwerte, auslesen darf, dass der Benutzer Daten auf das Feldgerät laden darf und/oder das Feldgerät parametrieren darf.

Eine Authentifizierung des Benutzers kann beispielsweise mittels einer Kamera, eines Tokens und/oder basierend auf einer Erfassung biometrischer Daten des Benutzers, wie beispielsweise einem Fingerabdruck und/oder einer Gesichtserkennung, erfolgen. Alternativ oder zusätzlich kann die Authentifizierung über einen Barcode, einen QR-Code, eine Koppelung mit dem Endgerät und/oder auf beliebige andere Weise erfolgen. Damit kann sichergestellt werden, dass jeder Benutzer nur die für ihn freigegebenen Bedienvorgänge an dem Feldgerät vornehmen kann. Insgesamt kann dies einen sicheren Betrieb einer Prozessanlage mit einem oder mehreren Feldgeräten ermöglichen.

Ein weiterer Aspekt der Erfindung betrifft die Verwendung gemäß Anspruch 10 eines Feldgeräts, so wie voranstehend und nachfolgend beschrieben, zur Detektion eines Benutzers in einer Umgebung des Feldgeräts, insbesondere mittels einer Überwachungsvorrichtung.

Ein weiterer Aspekt der Erfindung betrifft ein Verfahren gemäß Anspruch 11 zum Betreiben eines Feldgeräts, beispielsweise eines Feldgeräts so wie voranstehend und nachfolgend beschrieben, zur Erfassung einer Prozessvariablen.

Merkmale und Elemente des Feldgeräts, so wie voranstehend und nachfolgend beschrieben, können Merkmale, Elemente und/oder Schritte des Verfahrens, so wie voranstehend und nachfolgend beschrieben, sein und umgekehrt.

Ein weiterer, nicht beanspruchter, Aspekt der Erfindung betrifft ein Programmelement, das, wenn es auf einem Feldgerät und/oder einer Steuereinheit eines Feldgeräts ausgeführt wird, das Feldgerät dazu anleitet, Schritte des Verfahrens, so wie voranstehend und nachfolgend beschrieben, durchzuführen.

Ein weiterer, nicht beanspruchter, Aspekt der Erfindung betrifft ein computerlesbares Medium, auf welchem ein Programmelement, hinterlegt ist, das, wenn es auf einem Feldgerät und/oder einer Steuereinheit eines Feldgeräts ausgeführt wird, das Feldgerät dazu anleitet, Schritte des Verfahrens, so wie voranstehend und nachfolgend beschrieben, durchzuführen.

Sämtliche Offenbarung, welche voranstehend und nachfolgend in Bezug auf einen Aspekt der Erfindung beschrieben ist, gilt gleichermaßen für alle weiteren Aspekte der Erfindung.

Im Folgenden werden Ausführungsbeispiele der Erfindung unter Bezugnahme auf die Figuren beschrieben.

### Kurze Beschreibung der Figuren

Fig. 1 zeigt eine schematische Darstellung eines Feldgeräts gemäß einem Ausführungsbeispiel.
Fig. 2 zeigt eine weitere schematische Darstellung des Feldgeräts der Figur 1.
Fig. 3 zeigt ein schematisches Blockschaltbild des Feldgeräts der Figuren 1 und 2.
Fig. 4 zeigt ein Flussdiagramm zur Illustration von Schritten eines Verfahrens zum Betreiben eines Feldgeräts zur Erfassung einer Prozessvariablen gemäß einem weiteren Ausführungsbeispiel.

Die Figuren sind lediglich schematisch und nicht maßstabsgetreu. In den Figuren können gleiche, gleich wirkende oder ähnliche Elemente mit gleichen Bezugszeichen verwendet sein.

### Detaillierte Beschreibung von Ausführungsbeispielen

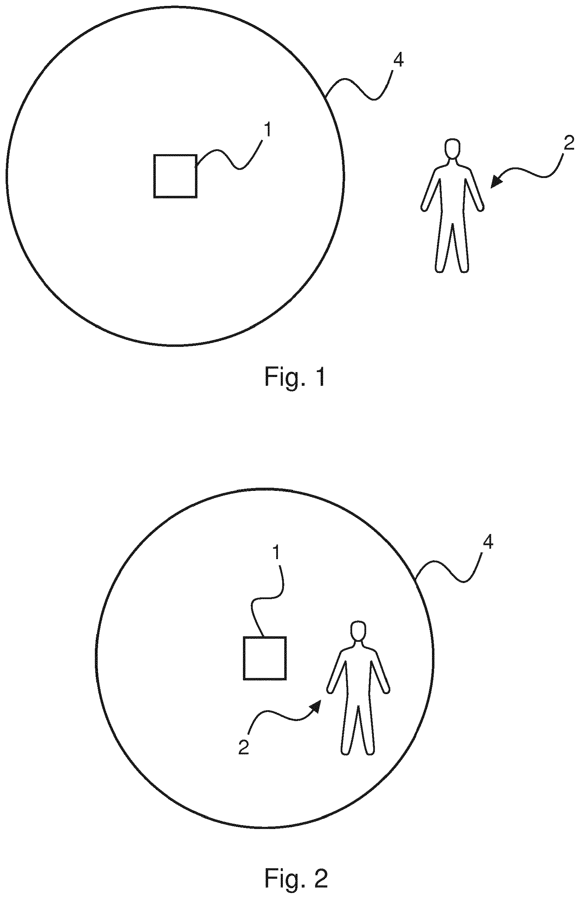

Figuren 1 bis 3 zeigen schematisch ein Feldgerät 1 gemäß einem Ausführungsbeispiel der Erfindung. Das Feldgerät 1 dient zur Erfassung einer Prozessvariablen, wobei das Feldgerät 1 eine Steuereinheit 3 und zumindest einen elektrischen Verbraucher 8, 10, 16, 17 aufweist. Der elektrische Verbraucher 8, 10, 16, 17 kann eine beliebige Komponente des Feldgeräts 1 bezeichnen. Beispielsweise kann der elektrische Verbraucher eine Schnittstelle 8, ein Kommunikationsmodul 10, eine Anzeigevorrichtung 16 und/oder eine Sensoreinheit 17 aufweisen und/oder. Bezeichnen. Dabei ist die Steuereinheit 3 dazu eingerichtet, ein Überwachungssignal einer Überwachungsvorrichtung 6 zu empfangen, welches eine Anwesenheit eines Benutzers 2 des Feldgeräts 1 in einer Umgebung 4 des Feldgeräts 1 repräsentiert und/oder anzeigt. Des Weiteren ist die Steuereinheit 3 dazu eingerichtet, basierend auf dem Überwachungssignal den wenigstens einen elektrischen Verbraucher 8, 10, 16, 17 zu betätigen, sodass der elektrische Verbraucher durch den Benutzer 2 berührungsfrei betätigbar ist.

Der Vorteil durch die berührungslose Betätigung des elektrischen Verbrauchers 8, 10, 16, 17 ist, dass dieses insbesondere unter erschwerten Bedingungen, wie beispielsweise einem Reinraum oder einem explosionsgeschützten Raum, genutzt werden kann und somit die Flexibilität des Einsatzes des Feldgeräts 1 deutlich verbessert wird. Zudem entsteht ein Energieeinsparungseffekt, da in Abhängigkeit der Anwesenheit des Benutzers 2 einer oder mehrere elektrische Verbraucher 8, 10, 16, 17 in ihrem Stromverbrauch reduziert und/oder deaktiviert werden können, wenn sich der Benutzer nicht in der Umgebung 4 des Feldgeräts 1 befindet, und aktiviert werden können, wenn sich der Benutzer 2 in der Umgebung des Feldgeräts 1 aufhält. Auf diese Weise kann einer oder mehrere elektrische Verbraucher 8, 10, 16, 17 bedarfsgerecht bei Anwesenheit des Benutzers 2 in der Umgebung 4 des Feldgeräts 1 betätigt werden.

In Figur 1 befindet sich der Benutzer 2 außerhalb der Umgebung 4 des Feldgeräts 1. In diesem Fall kann die Steuereinheit den wenigstens einen elektrischen Verbraucher 8, 10, 16, 17 deaktivieren, beispielsweise basierend auf einer Reduktion der Energiezufuhr. Diese eingesparte Energie kann etwa in einem Energiespeicher 14 des Feldgeräts gespeichert und/oder zwischengespeichert werden, sodass diese Energie weiteren Komponenten des Feldgeräts bei Bedarf zur Verfügung gestellt werden kann. Dies kann insbesondere bei einer Ausgestaltung des Feldgeräts als batteriebetriebenes Feldgeräts oder als Zweileiter-Feldgerät von Vorteil sein.

In Figur 2 befindet sich der Benutzer 2 innerhalb der Umgebung 4 des Feldgeräts 1. Die Anwesenheit des Benutzers 2 in der Umgebung 4 wird durch die Überwachungsvorrichtung 6 detektiert, welches der Steuereinheit 3 das Überwachungssignal bereitstellt. Als Antwort auf das Überwachungssignal kann die Steuereinheit 3 sodann einen oder mehrere elektrische Verbraucher 8, 10, 16, 17 des Feldgeräts 1 betätigen, insbesondere aktivieren. Auf diese Weise kann beispielsweise die Anzeigevorrichtung 16 aktiviert werden und/oder eine Helligkeit einer Beleuchtung der Anzeigevorrichtung 16 kann angepasst und/oder erhöht werden, sodass der Benutzer 2 etwa die Anzeigevorrichtung 16 ablesen kann. Alternativ oder zusätzlich kann das Kommunikationsmodul 10 aktiviert werden, beispielsweise um einen Messwert von dem Feldgerät an einen Empfänger zu übermitteln. Alternativ oder zusätzlich kann die Schnittstelle 8 aktiviert werden, etwa um einen Messwert von dem Feldgerät an einen Empfänger zu übermitteln. Alternativ oder zusätzlich kann die Sensoreinheit 17 aktiviert werden und/oder es kann eine Messung der Prozessvariable mittels der Sensoreinheit 17 ausgelöst werden.

Zur Detektion der Anwesenheit des Benutzers 2 in der Umgebung 4 des Feldgeräts 1 kann ein beliebiger Sensor und/oder ein beliebiges Detektionsverfahren eingesetzt werden. In dem Ausführungsbeispiel der Figuren 1 bis 3 ist die Überwachungsvorrichtung 6 Teil des Feldgeräts 1 und/oder ist in dem Feldgerät 1 integriert. Beispielsweise kann die Überwachungsvorrichtung 6 in einem Gehäuse des Feldgeräts angeordnet sein. Alternativ kann die Überwachungsvorrichtung auch als externe Vorrichtung ausgeführt sein, welche das Überwachungssignal beispielsweise über die Schnittstelle 8 und/oder das Kommunikationsmodul 10 an das Feldgerät 1 übermitteln kann.

Zur eigentlichen Detektion der Anwesenheit des Benutzers 2 in der Umgebung kann die Überwachungsvorrichtung 6 beispielsweise einen Näherungssensor, einen Nahfeldsensor, einen Bewegungssensor, einen Abstandssensor, einen Funk-Sensor, einen Mikrowellen-Sensor, einen optischen Sensor, eine Kamera, einen Laser-Sensor, einen kapazitiven Sensor, einen Infrarot-Sensor, einen Wärme-Sensor, einen Radarsensor und/oder einen Ultraschall-Sensor aufweisen. Erfindungsgemäß weist die Überwachungsvorrichtung 6 zur Detektion des Anwesenheit des Benutzers 2 in der Umgebung einen RFID Sensor zur Detektion eines RFID-Transponders des Benutzers auf. Alternativ oder zusätzlich kann die Überwachungsvorrichtung 6 das Kommunikationsmodul aufweisen, wobei ein Herstellen einer Kommunikationsverbindung zwischen dem Kommunikationsmodul 10 und einem Endgerät des Benutzers 2 zur Detektion der Anwesenheit des Benutzers 2 in der Umgebung 4 genutzt werden kann.

Optional kann die Steuereinheit 3 ferner dazu eingerichtet sein, basierend auf dem Überwachungssignal eine Authentifizierung des Benutzers 2 vorzunehmen. Erfindungsgemäß kann die Steuereinheit 3 dazu eingerichtet sein, basierend auf dem Überwachungssignal eine Nutzungsberechtigung für eine Benutzung des Feldgeräts 1 durch den Benutzer 2 festzulegen und/oder zu aktivieren. Dadurch wird das Feldgerät 1 effizient vor Fremdzugriff, etwa durch einen nicht befugten Benutzer, geschützt.

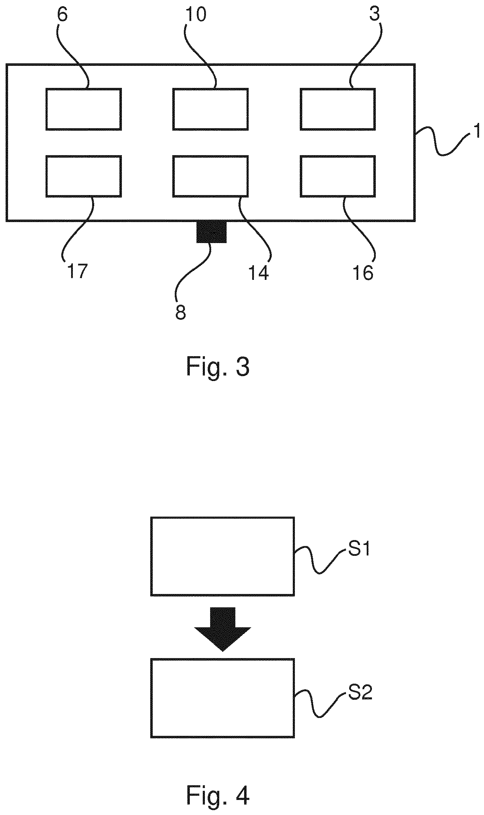

Figur 4 zeigt ein Flussdiagramm zur Illustration von Schritten eines Verfahrens zum Betreiben eines Feldgeräts 1 gemäß einem Ausführungsbeispiel der Erfindung. Bei dem Feldgerät 1 kann es sich um das mit Bezug auf die Figuren 1 bis 3 beschriebene Feldgerät handeln.

In einem Schritt S1 wird mit einer Steuereinheit 3 des Feldgeräts 1 ein Überwachungssignal einer Überwachungsvorrichtung 6 zur Detektion einer Anwesenheit eines Benutzers 2 des Feldgeräts 1 in einer Umgebung 4 des Feldgeräts 1 empfangen, wobei das Überwachungssignal indikativ und/oder repräsentativ für die Anwesenheit des Benutzers 2 des Feldgeräts 1 in der Umgebung 4 des Feldgeräts 1 ist. In einem weiteren Schritt S2 wird durch die Steuereinheit 3 wenigstens ein elektrischer Verbraucher 8, 10, 16, 17 des Feldgeräts 1 betätigt.

Ergänzend sei daraufhingewiesen, dass "umfassend" und "aufweisend" keine anderen Elemente ausschließt und die unbestimmten Artikel "eine" oder "ein" keine Vielzahl ausschließen. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkungen anzusehen.

## Patentansprüche

1. Feldgerät (1) zur Erfassung einer Prozessvariable, das Feldgerät (1) aufweisend:
eine Steuereinheit (3);
wenigstens einen elektrischen Verbraucher (8, 10, 16, 17); und
eine Überwachungsvorrichtung (6); welche dazu eingerichtet ist, eine Anwesenheit eines Benutzers (2) in einer Umgebung (4) des Feldgeräts (1) zu detektieren und als Antwort auf eine Detektion des Benutzers (2) ein Überwachungssignal an die Steuereinheit (3) zu übermitteln, wobei das Überwachungssignal indikativ und/oder repräsentativ für die Anwesenheit des Benutzers (2) des Feldgeräts (1) in der Umgebung (4) des Feldgeräts (1) ist;
wobei die Steuereinheit (3) dazu eingerichtet ist, das Überwachungssignal der Überwachungsvorrichtung (6) zur Detektion der Anwesenheit des Benutzers (2) des Feldgeräts (1) in der Umgebung (4) des Feldgeräts (1) zu empfangen;
wobei die Steuereinheit (3) dazu eingerichtet ist, basierend auf dem Überwachungssignal den wenigstens einen elektrischen Verbraucher (8, 10, 16, 17) zu betätigen, sodass der wenigstens eine elektrische Verbraucher durch den Benutzer (2) berührungsfrei betätigbar ist,
**dadurch gekennzeichnet, dass**
die Steuereinheit (3) ferner dazu eingerichtet ist, basierend auf dem Überwachungssignal eine Nutzungsberechtigung für eine Benutzung des Feldgeräts durch den Benutzer festzulegen und/oder zu aktivieren; und
dass die Überwachungsvorrichtung (6) einen RFID-Sensor zur Detektion eines RFID-Transponders des Benutzers aufweist.

2. Feldgerät nach Anspruch 1,
wobei die Steuereinheit (3) dazu eingerichtet ist, basierend auf dem Überwachungssignal den wenigstens einen elektrischen Verbraucher (8, 10, 16, 17) zu aktivieren und/oder zu deaktivieren, sodass der wenigstens eine elektrische Verbraucher (8, 10, 16, 17) durch den Benutzer (2) berührungsfrei aktivierbar und/oder deaktivierbar ist.

3. Feldgerät nach Anspruch 1,
wobei die Überwachungsvorrichtung (6) außerhalb eines Gehäuses des Feldgeräts (1) angeordnet ist; und/oder
wobei das Feldgerät (1) ferner eine Schnittstelle (8) zur Anbindung des Feldgeräts (1) an die Überwachungsvorrichtung (6) aufweist.

4. Feldgerät nach einem der Ansprüche 1 bis 3,
wobei die Überwachungsvorrichtung (6) wenigstens ein Kommunikationsmodul (10) aufweist, welches dazu eingerichtet ist, eine drahtlose Kommunikationsverbindung mit einem Endgerät des Benutzers (2) herzustellen, sodass die Anwesenheit des Benutzers (2) in der Umgebung (4) des Feldgeräts (1) basierend auf einer Koppelung des Kommunikationsmoduls (10) mit dem Endgerät des Benutzers (2) detektierbar ist.

5. Feldgerät nach einem der voranstehenden Ansprüche,
wobei das Feldgerät (1) als ein Füllstandmessgerät (12) zur Erfassung eines Füllstands eines Mediums, ein radarbasiertes Füllstandmessgerät zur Erfassung eines Füllstands eines Mediums, ein Fließgeschwindigkeitsmessgerät zur Erfassung einer Fließgeschwindigkeit eines Mediums, ein Grenzstandmessgerät zur Erfassung eines Grenzstandes eines Mediums oder ein Druckmessgerät zur Erfassung eines Drucks eines Mediums ausgebildet ist.

6. Feldgerät nach einem der voranstehenden Ansprüche, ferner aufweisend:
einen Energiespeicher (14);
wobei die Steuereinheit (3) dazu eingerichtet ist, in Abwesenheit des Benutzers (2) und/oder in Abwesenheit des Überwachungssignals, elektrische Energie in dem Energiespeicher (14) zu speichern.

7. Feldgerät nach einem der voranstehenden Ansprüche,
wobei der wenigstens eine elektrische Verbraucher (8, 10, 16, 17) wenigstens eine Anzeigevorrichtung (16) aufweist; und
wobei die Steuereinheit (3) dazu eingerichtet ist, basierend auf dem Überwachungssignal die wenigstens eine Anzeigevorrichtung (16) zu aktivieren und/oder eine Beleuchtung der Anzeigevorrichtung (16) anzupassen.

8. Feldgerät nach einem der voranstehenden Ansprüche,
wobei der wenigstens eine elektrische Verbraucher (8, 10, 16, 17) eine Sensoreinheit (17) zur Messung der Prozessvariable aufweist; und
wobei die Steuereinheit (3) dazu eingerichtet ist, basierend auf dem Überwachungssignal die Sensoreinheit (17) derart zu betätigen, dass die Sensoreinheit (17) eine Messung der Prozessvariable durchführt.

9. Feldgerät nach einem der voranstehenden Ansprüche, wobei der wenigstens eine elektrische Verbraucher (8, 10, 16, 17) ein Kommunikationsmodul (10) zur Übertragung eines Messwertes der Prozessvariable an einen Empfänger aufweist; und
wobei die Steuereinheit (3) dazu eingerichtet ist, als Antwort auf das Überwachungssignal das Kommunikationsmodul (10) derart zu betätigen, dass ein Messwert der Prozessvariable an den Empfänger übertragen wird.

10. Verwendung eines Feldgeräts (1) nach einem der voranstehenden Ansprüche zur Detektion eines Benutzers (2) in einer Umgebung (4) des Feldgeräts.

11. Verfahren nach Anspruch 10 zum Betreiben des Feldgeräts nach einem der Ansprüche bis 9 zur Erfassung einer Prozessvariable, **dadurch gekennzeichnet, dass** es die folgenden Schritte aufweist:
Empfangen (S1), mit einer Steuereinheit (3) des Feldgeräts (1), eines Überwachungssignals einer Überwachungsvorrichtung (6) zur Detektion einer Anwesenheit eines Benutzers (2) des Feldgeräts (1) in einer Umgebung (4) des Feldgeräts (1), wobei das Überwachungssignal indikativ und/oder repräsentativ für die Anwesenheit des Benutzers (2) des Feldgeräts (1) in der Umgebung (4) des Feldgeräts (1) ist;
Betätigen (S2), durch die Steuereinheit (3), wenigstens eines elektrischen Verbrauchers (8, 10, 16, 17) des Feldgeräts (1); und
Festlegen und/oder Aktivieren, basierend auf dem Überwachungssignal, einer Nutzungsberechtigung für eine Benutzung des Feldgeräts durch den Benutzer.

## Claims

1. A field device (1) for detecting a process variable, the field device (1) comprising:
a control unit (3);
at least one electrical load (8, 10, 16, 17); and
a monitoring device (6); which is configured to detect a presence of a user (2) in an environment (4) of the field device (1) and to transmit a monitoring signal to the control unit (3) in response to a detection of the user (2), wherein the monitoring signal is indicative and/or representative of the presence of the user (2) of the field device (1) in the environment (4) of the field device (1);
wherein the control unit (3) is configured to receive the monitoring signal of the monitoring device (6) for detecting the presence of the user (2) of the field device (1) in the environment (4) of the field device (1);
wherein the control unit (3) is configured to actuate the at least one electrical load (8, 10, 16, 17) based on the monitoring signal, so that the at least one electrical load can be actuated by the user (2) without contact,
**characterized in that**
the control unit (3) is further configured to set and/or activate an authorization for use of the field device by the user based on the monitoring signal; and
**in that** the monitoring device (6) comprises an RFID sensor for detecting an RFID transponder of the user.

2. The field device according to claim 1,
wherein the control unit (3) is configured to activate and/or deactivate the at least one electrical load (8, 10, 16, 17) based on the monitoring signal, so that the at least one electrical load (8, 10, 16, 17) can be activated and/or deactivated by the user (2) without contact.

3. The field device according to claim 1,
wherein the monitoring device (6) is arranged outside a housing of the field device (1); and/or
wherein the field device (1) further comprises an interface (8) for connecting the field device (1) to the monitoring device (6).

4. The field device according to any one of claims 1 to 3,
wherein the monitoring device (6) comprises at least one communication module (10), which is configured to establish a wireless communication connection with a user device of the user (2), so that the presence of the user (2) in the environment (4) of the field device (1) is detectable based on a coupling of the communication module (10) with the user device of the user (2).

5. The field device according to any of the preceding claims,
wherein the field device (1) is configured as a level meter (12) for detecting a level of a medium, a radar-based level meter for detecting a level of a medium, a flow velocity meter for detecting a flow velocity of a medium, a level limit meter for detecting a level limit of a medium, or a pressure meter for detecting a pressure of a medium.

6. The field device according to any one of the preceding claims, further comprising:
an energy storage device (14);
wherein the control unit (3) is configured to store electrical energy in the energy storage (14) in the absence of the user (2) and/or in the absence of the monitoring signal.

7. The field device according to any of the preceding claims,
wherein the at least one electrical load (8, 10, 16, 17) comprises at least one display device (16); and
wherein the control unit (3) is configured to activate the at least one display device (16) and/or to adjust an illumination of the display device (16) based on the monitoring signal.

8. The field device according to any of the preceding claims,
wherein the at least one electrical load (8, 10, 16, 17) comprises a sensor unit (17) for measuring the process variable; and
wherein the control unit (3) is configured to actuate the sensor unit (17) based on the monitoring signal such that the sensor unit (17) performs a measurement of the process variable.

9. The field device according to any one of the preceding claims, wherein the at least one electrical load (8, 10, 16, 17) comprises a communication module (10) for transmitting a measured value of the process variable to a receiver; and
wherein the control unit (3) is configured to actuate the communication module (10) in response to the monitoring signal such that a measured value of the process variable is transmitted to the receiver.

10. Use of a field device (1) according to any of the preceding claims for detecting a user (2) in an environment (4) of the field device.

11. A method according to claim 10 for operating the field device according to any one of claims 1 to 9 to detect a process variable, **characterized in that** the method comprises the steps of:
receiving (S1), with a control unit (3) of the field device (1), a monitoring signal of a monitoring device (6) for detecting a presence of a user (2) of the field device (1) in an environment (4) of the field device (1), the monitoring signal being indicative and/or representative of the presence of the user (2) of the field device (1) in the environment (4) of the field device (1);
actuating (S2), by the control unit (3), at least one electrical load (8, 10, 16, 17) of the field device (1); and
setting and/or activating, based on the monitoring signal, an authorization for use of the field device by the user of the field device.

## Revendications

1. Appareil de terrain (1) pour détecter une variable de processus, l'appareil de terrain (1) présentant :
une unité de commande (3) ;
au moins un consommateur électrique (8, 10, 16, 17) ; et
un dispositif de surveillance (6) qui est conçu pour détecter une présence d'un utilisateur (2) dans un environnement (4) de l'appareil de terrain (1) et pour transmettre un signal de surveillance à l'unité de commande (3) en réponse à une détection de l'utilisateur (2), le signal de surveillance étant indicatif et/ou représentatif de la présence de l'utilisateur (2) de l'appareil de terrain (1) dans l'environnement (4) de l'appareil de terrain (1) ;
dans lequel l'unité de commande (3) est conçue pour recevoir le signal de surveillance du dispositif de surveillance (6) pour détecter la présence de l'utilisateur (2) de l'appareil de terrain (1) dans l'environnement (4) de l'appareil de terrain (1) ;
dans lequel l'unité de commande (3) est conçue pour actionner ledit au moins un consommateur électrique (8, 10, 16, 17) sur la base du signal de surveillance, de sorte que ledit au moins un consommateur électrique peut être actionné sans contact par l'utilisateur (2),
**caractérisé en ce que**
l'unité de commande (3) est en outre conçue pour définir et/ou activer, sur la base du signal de surveillance, une autorisation d'utilisation de l'appareil de terrain par l'utilisateur ; et que
le dispositif de surveillance (6) présente un capteur RFID pour détecter un transpondeur RFID de l'utilisateur.

2. Appareil de terrain selon la revendication 1,
dans lequel l'unité de commande (3) est conçue pour activer et/ou désactiver ledit au moins un consommateur électrique (8, 10, 16, 17) sur la base du signal de surveillance, de sorte que ledit au moins un consommateur électrique (8, 10, 16, 17) peut être activé et/ou désactivé sans contact par l'utilisateur (2).

3. Appareil de terrain selon la revendication 1,
dans lequel le dispositif de surveillance (6) est disposé à l'extérieur d'un boîtier de l'appareil de terrain (1) ; et/ou dans lequel l'appareil de terrain (1) présente en outre une interface (8) pour connecter l'appareil de terrain (1) au dispositif de surveillance (6).

4. Appareil de terrain selon l'une des revendications 1 à 3,
dans lequel le dispositif de surveillance (6) présente au moins un module de communication (10) qui est conçu pour établir une liaison de communication sans fil avec un terminal de l'utilisateur (2), de sorte que la présence de l'utilisateur (2) dans l'environnement (4) de l'appareil de terrain (1) peut être détectée sur la base d'un couplage du module de communication (10) avec le terminal de l'utilisateur (2) .

5. Appareil de terrain selon l'une des revendications précédentes,
dans lequel l'appareil de terrain (1) est conçu comme un appareil de mesure de niveau de remplissage (12) pour détecter un niveau de remplissage d'un milieu, un appareil de mesure de niveau de remplissage basé sur un radar pour détecter un niveau de remplissage d'un milieu, un appareil de mesure de vitesse d'écoulement pour détecter une vitesse d'écoulement d'un milieu, un appareil de mesure de niveau limite pour détecter un niveau limite d'un milieu ou un appareil de mesure de pression pour détecter une pression d'un milieu.

6. Appareil de terrain selon l'une des revendications précédentes, présentant en outre :
un dispositif de stockage d'énergie (14) ;
dans lequel l'unité de commande (3) est conçue pour stocker de l'énergie électrique dans le dispositif de stockage d'énergie (14) en l'absence de l'utilisateur (2) et/ou en l'absence du signal de surveillance.

7. Appareil de terrain selon l'une des revendications précédentes,
dans lequel ledit au moins un consommateur électrique (8, 10, 16, 17) présente au moins un dispositif d'affichage (16) ; et dans lequel l'unité de commande (3) est conçue pour activer ledit au moins un dispositif d'affichage (16) et/ou pour adapter un éclairage du dispositif d'affichage (16) sur la base du signal de surveillance.

8. Appareil de terrain selon l'une des revendications précédentes,
dans lequel ledit au moins un consommateur électrique (8, 10, 16, 17) présente une unité de détection (17) pour mesurer la variable de processus ; et
dans lequel l'unité de commande (3) est conçue pour actionner l'unité de détection (17) sur la base du signal de surveillance de telle sorte que l'unité de détection (17) effectue une mesure de la variable de processus.

9. Appareil de terrain selon l'une des revendications précédentes,
dans lequel ledit au moins un consommateur électrique (8, 10, 16, 17) présente un module de communication (10) pour transmettre une valeur mesurée de la variable de processus à un récepteur ; et
dans lequel l'unité de commande (3) est conçue pour actionner le module de communication (10) en réponse au signal de surveillance de telle sorte qu'une valeur mesurée de la variable de processus soit transmise au récepteur.

10. Utilisation d'un appareil de terrain (1) selon l'une des revendications précédentes pour détecter un utilisateur (2) dans un environnement (4) de l'appareil de terrain.

11. Procédé selon la revendication 10 pour faire fonctionner l'appareil de terrain selon l'une des revendications 1 à 9 afin de détecter une variable de processus, **caractérisé en ce qu'**il présente les étapes consistant à :
recevoir (Sl), par une unité de commande (3) de l'appareil de terrain (1), un signal de surveillance d'un dispositif de surveillance (6) pour détecter une présence d'un utilisateur (2) de l'appareil de terrain (1) dans un environnement (4) de l'appareil de terrain (1), le signal de surveillance étant indicatif et/ou représentatif de la présence de l'utilisateur (2) de l'appareil de terrain (1) dans l'environnement (4) de l'appareil de terrain (1) ;
actionner (S2), par l'unité de commande (3), au moins un consommateur électrique (8, 10, 16, 17) de l'appareil de terrain (1) ; et
définir et/ou activer, sur la base du signal de surveillance, une autorisation d'utilisation de l'appareil de terrain par l'utilisateur.
